(19) Europäisches Patentamt
European Patent Office
Office européen des brevets

(11) Veröffentlichungsnummer: **0 046 932**
**B1**

(12) # EUROPÄISCHE PATENTSCHRIFT

(45) Veröffentlichungstag der Patentschrift: **23.01.85**

(51) Int. Cl.⁴: **H 01 M 6/18,** H 01 M 10/39, C 01 B 33/32, C 04 B 35/00

(21) Anmeldenummer: **81106469.0**

(22) Anmeldetag: **20.08.81**

(54) **Neue Mischkristalle, Verfahren zu ihrer Herstellung und ihre Verwendung.**

(30) Priorität: **01.09.80 DE 3032894**

(43) Veröffentlichungstag der Anmeldung: **10.03.82 Patentblatt 82/10**

(45) Bekanntmachung des Hinweises auf die Patenterteilung: **23.01.85 Patentblatt 85/4**

(84) Benannte Vertragsstaaten: **AT FR GB NL SE**

(56) Entgegenhaltungen:
**US - A - 4 049 891**
**US - A - 4 097 345**
**US - A - 4 166 159**
**MAT.RES.BULL., Band 14, 1979, Nr. 11, *Pergamon Press* US BOILOT J.P. et al.: "Phase Transformation in Na1+xSixZr2P3-xO12 Compounds; Seiten 1469-1477**
**SOLID STATE IONICS, 3/4, 1981, North-Holland Publishing Co. NL U.VON ALPEN: "Compositional Dependence of the Electrochemical and Structural Parameters in the Nasicon System**

(73) Patentinhaber: **Max-Planck-Gesellschaft zur Förderung der Wissenschaften e.V., Bunsenstrasse 10, D-3400 Göttingen (DE)**
Patentinhaber: **VARTA *Batterie Aktiengesellschaft*, Am Leineufer 51, D-3000 Hannover 21 (DE)**

(72) Erfinder: **Bell, Michael-Francis, Dr., Sterling Hall Queen's University, Kingston, K7L 3 N6 (CA)**
Erfinder: **Höfer, Hans, Dr., Hindenburgplatz 1, D-5060 Bergisch Gladbach (DE)**
Erfinder: **Diem, Holger, Gaiernstrasse 23, D-7130 Mühlacker 7 (DE)**
Erfinder: **von Alpen, Ulrich, Dr., Im Kastanienhain 5, D-6246 Schlossborn (DE)**

(74) Vertreter: **Kaiser, Dieter Ralf, Dipl.-Ing., Gundelhardtstrasse 72, D-6233 Kelkheim/Ts. (DE)**

(56) Entgegenhaltungen: (Fortsetzung)
**(Na1+xSixZr2P3-xO12); Seiten 215-218**
**SOLID STATE IONICS, Band 1, August 1980, Nr. 3,4 AMSTERDAM (NL) T.TAKAHASHI et al.: "Solid-State Ionics-Conductivities of Na+Ion Conductors Based on Nasicon" Seiten 163-175**

**Die Akte enthält technische Angaben, die nach dem Eingang der Anmeldung eingereicht wurden und die *nicht in dieser Patentschrift enthalten sind.***

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 046 932 B1

BUNDESDRUCKEREI BERLIN

**Beschreibung**

Die Erfindung betrifft Mischkristalle aus dem Vierstoffsystem mit den Endgliedern $Na_2O$, $MO_2$, $Z_2O_5$ und $SiO_2$, wobei M eines der Übergangsmetalle der IV. Gruppe des Periodensystems, Zr, Ti, Hf oder Mischungen davon und Z eines der Elemente der V. Gruppe des Periodensystems P, Sb, Bi, V, Nb, Ta oder Mischungen davon sind.

Die Verwendung fester, gut ionenleitender Elektrolyte in Batterien, d. h. Primärzellen oder Sekundärzellen, ist von erheblicher technischer Bedeutung, da feste Elektrolyte

1) bei verschwindender Elektronenteilleitfähigkeit die Selbstentladung der Batterie nahezu verhindern und damit eine lange Lagerfähigkeit ermöglichen,
2) als feste Körper bei der Verwendung in Feststoffbatterien das Dichtungsproblem herkömmlicher Zellen mit flüssigen Elektrolyten umgehen und
3) den Bau von Hochtemperatur-Hochenergiezellen mit flüssigen Elektroden und einem festen Separator ermöglichen.

Die bisher bekannten, für den genannten Zweck verwendbaren Festelektrolyte lassen jedoch noch zu wünschen übrig. Zum Teil ist ihre Beständigkeit unbefriedigend, insbesondere bei höheren Temperaturen, zum Teil genügt die Leitfähigkeit den zu stellenden Anforderungen nur unbefriedigend.

Technische Bedeutung haben vor allem Festelektrolyte auf Basis von Lithiumverbindungen, wie Lithiumnitrid, oder von Natriumverbindungen, wie Na-$\beta$-Alumina ($Na_2O \cdot 11Al_2O_3$) erlangt. Ferner sind. z. B. aus der US-PS 4 049 891, Mischkristalle vom sogenannten Nasicon-Typ bekannt, deren Zusammensetzung sich zwischen $NaZr_2P_3O_{12}$ und $Na_4Zr_2Si_3O_{12}$ erstreckt. Die bekannte Mischkristallreihe genügt der allgemeinen Formel

$$Na_{1+x}Si_xZr_2P_{3-x}O_{12},$$

in der x einen Wert von größer als 0 bis 3 aufweist.

Die Erfindung ist mit der Aufgabe befaßt, innerhalb des zugrundeliegenden Vierstoffsystems, welches bei räumlicher Darstellung ein Tetraeder mit den Eckpunkten $ZrO_2$, $P_2O_5$, $SiO_2$ und $Na_2O$ bildet, weitere Mischkristalle zu erschließen, die als Festelektrolyte gute Beständigkeit und hohe Ionenleitfähigkeit aufweisen.

Die Aufgabe wird erfindungsgemäß dadurch gelöst, daß sie einem Kristallfeld angehören, welches definiert ist durch die quasibinären Schnitte $NaM_2Z_3O_{12}$ ... $Na_4M_{0,5}Si_3O_9$ und $NaM_2Z_3O_{12}$ ... $Na_4M_{1,5}Si_3O_{11}$, ausgenommen die Zusammensetzungen $NaM_2Z_3O_{12}$ bis $Na_{1,01}M_{1,997}Si_{0,01}Z_{2,99}O_{11,98}$.

M bedeutet darin vorzugsweise Zr oder ein Gemisch von Zr mit Hf oder Ti, während Z vorzugsweise P ist.

In Figur 1 ist die Phasenbeziehung für Nasicon und das erfindungsgemäße neue Mischkristallfeld im Existenzbereich der drei Endglieder $NaZr_2P_3O_{12}$, $ZrO_2$ und der formalen Verbindung $Na_4Si_3O_8$ dargestellt.

Allgemein lassen sich die neuen Mischkristalle mit der Formel

$$Na_{1+x}M_{2-1/3x+y}Si_xZ_{3-x}O_{12-2/3x+2y}$$

beschreiben, wobei x eine Zahl von 0,01 bis 3 und y eine Zahl von 0 bis 0,5 bedeuten. Die Formel gilt jedoch nur unter der Bedingung, daß der Ausdruck $-1/3x+y$ kleiner als 0 ist, so daß die bekannte Verbindung $NaZr_2P_3O_{12}$ (Nasicon) aus dem neuen Mischkristallfeld ausgespart wird. Dieses reicht demzufolge — vgl. Figur 1 — entlang den quasibinären Schnitten $NaZr_2P_3O_{12}$ ... $Na_4Zr_{0,5}Si_3O_9$ und $NaZr_2P_3O_{12}$ ... $Na_4Zr_{1,5}Si_3O_{11}$ jeweils nur bis zu einer dem $Na_4Zr_2P_3O_{12}$ eng benachbarten Randphase

$$Na_{1,01}Zr_{1,997}Si_{0,01}P_{2,99}O_{11,98},$$

deren Zusammensetzung sich aus der allgemeinen Mischkristallformel mit den Parameterwerten x=0,01 und y=0 ergibt. Die ebenfalls neuen Randphasen $Na_4Zr_{0,5}Si_3O_9$, $Na_4ZrSi_3O_{10}$ und $Na_4Zr_{1,5}Si_3O_{11}$ liegen auf dem quasibinären Schnitt zwischen $ZrO_2$ und den formalen $Na_4Si_3O_8$.

Die erfindungsgemäßen Mischkristalle sind aber auch im Vierstoffsystem mit den Endgliedern $ZrO_2$, $P_2O_5$, $SiO_2$ und $Na_2O$ darstellbar. Die erfindungsgemäßen neuen Mischkristalle existieren im Bereich x=0,01 bis etwa 1,6 als phasenrein erhältliche rhomboedrische Verbindung, ähnlich wie der bekannten NASICON-Mischkristallreihe, die jedoch als nicht phasenrein bekannt ist. Im Unterschied zum NASICON-System liegen jedoch die erfindungsgemäßen Verbindungen im Mischkristallfeld gegeben durch $x>1,5$ und $0 \leq y \leq 0,5$ als monokline Phase vor, einschließlich der Randphasen $Na_4Zr_{0,5}Si_3O_9$, $Na_4ZrSi_3O_{10}$ und $Na_4Zr_{1,5}Si_3O_{11}$, mit einer gegenüber der rhomboedrischen Phase erhöhten Leitfähigkeit. Auch diese monoklinen Mischkristalle lassen sich phasenrein darstellen. So zeigt die Randphase $Na_4ZrSi_3O_{10}$ bei hohen Temperaturen eine beträchtliche Leitfähigkeit $\sigma$, die bei 300°C beispielsweise $1,6 \times 10^{-3}\ \Omega^{-1}\ cm^{-1}$ beträgt. Gegenüber der Randphase x=3 im Nasicon-Mischkristallsystem ist die Aktivierungsenergie für die Ionenleitung von 29 kJ/Mol auf 42 kJ/Mol vergrößert. Bei einer graphischen Darstellung der Abhängigkeit der Leitfähigkeit von der Temperatur im logarithmischen System entspricht die Aktivierungsenergie dem Anstieg der erhaltenen Geraden. Dies läßt erkennen, daß die Aktivierungsenergie bei hohen Betriebstemperaturen der Zelle möglichst hoch sein sollte.

Bei Raumtemperatur ist die Leitfähigkeit bei den erfindungsgemäßen neuen Mischkristallen

um den Faktor 5 gegenüber den besten Leitfähigkeitsdaten von Nasicon erhöht. Sie entspricht damit etwa der Leitfähigkeit von Na-$\beta$-Alumina, ohne jedoch den Nachteil einer ungenügenden Beständigkeit in feuchter Atmosphäre aufzuweisen, wie sie für Na-$\beta$-Alumina bekannt ist.

Aufgrund ihrer besonders guten Leitfähigkeitseigenschaften werden erfindungsgemäße Mischkristalle, welche eine monokline Struktur und einen Wert für $x > 1{,}6$ aufweisen, bevorzugt. Diese bevorzugten Kristalle sind ebenfalls einphasig und weisen einen hohen Kristallisationsgrad auf, was auch die hohe Dichte von daraus hergestellten Tabletten (mehr als 98% der theoretischen Dichte) zeigt.

Die erfindungsgemäßen neuen Mischkristalle sind, wie bereits erwähnt, besonders beständig, insbesondere gegenüber dem als Elektrode bei Verwendung der Kristalle als Festkörperelektrolyt in einer Batterie in Betracht kommenden Natrium. Auch hierin sind sie dem Nasicon erheblich überlegen. So zeigen die Fig. 2a und 2b der Zeichnung die Beständigkeit der erfindungsgemäßen Mischkristalle im Vergleich zu Nasicon gegenüber Natrium bei 350°C. Hierbei wurden die zu vergleichenden Kristalle in Form einer gesinterten Tablette 18 bzw. 20 Tage bei 350°C in flüssigem Natrium gelagert. Fig. 2a zeigt eine Elektronenmikroskopaufnahme der Oberfläche der Nasicon-Tablette. Es sind deutliche Ätzgruben zu erkennen, die durch eine Oberflächenreaktion zwischen Nasicon und flüssigem Natrium entstanden sind.

Fig. 2b zeigt die entsprechende Aufnahme bei dem erfindungsgemäßen Mischkristall. Im Rahmen der Auflösung des Elektronenmikroskops sind keinerlei Angriffsspuren erkennbar, sondern nur eine leichte Verfärbung. Verwendet wurde hierbei der erfindungsgemäße Mischkristall

$$Na_{3,23}Zr_{1,48}Si_{2,23}P_{0,77}O_{10,96}$$

mit $x = 2{,}23$ und $y = 0{,}23$.

Dies zeigt, daß der erfindungsgemäße Mischkristall z. B. bei der Arbeitstemperatur der Na/S-Zelle mit flüssigem Natrium stabil ist und die Leistungseigenschaften von Na-$\beta$-Alumina erreicht, die von Nasicon weit übertrifft.

Die Leitfähigkeit des erfindungsgemäßen Mischkristalls mit $x = 2{,}1$ in Abhängigkeit von der Temperatur zeigt Fig. 3 der Zeichnung dargestellt, im logarithmischen System.

Im erfindungsgemäßen Mischkristall ist M vorzugsweise Zirkonium (Zr) oder ein Gemisch von Zr und Hf (handelsübliches Zr enthält normalerweise Hf). Die gleichen Eigenschaften können aber auch erhalten werden, wenn M aus Ti oder Hf alleine oder im Gemisch miteinander bzw. mit Zr besteht.

Z besteht vorzugsweise aus Phosphor, obwohl auch die anderen oben aufgeführten Elemente der V. Gruppe des Periodischen Systems den Phosphor darin zumindest teilweise ersetzen können.

Das erfindungsgemäße Verfahren zur Herstellung der neuen Mischkristalle ist dadurch gekennzeichnet, daß man die Komponenten des Mischkristalls in den jeweils für eine bestimmte gewünschte Zusammensetzung erforderlichen molaren Anteilen in feinpulveriger Form (Korngröße kleiner 100 µm) und bei einer möglichst hohen Temperatur, jedoch unter Vermeidung des Auftretens einer flüssigen Phase, so lange calciniert, bis im Röntgendiagramm kein $MO_2$-Peak mehr erkennbar ist, wobei gegebenenfalls das Calcinieren ein- oder mehrfach unterbrochen wird, um das Material erneut fein zu vermahlen.

Wesentlich beim erfindungsgemäßen Verfahren ist die stöchiometrische Zusammensetzung der Ausgangssubstanzen entsprechend der allgemeinen Formel der erfindungsgemäßen Mischkristalle und die Durchführung einer Calcinierung, bis eine $ZO_2$-Phase, insbesondere $ZrO_2$, völlig verschwunden ist, was sich im Röntgendiagramm verfolgen läßt. Dabei muß das Auftreten einer flüssigen Phase vermieden werden. Andererseits sollte die Calcinierung jedoch bei möglichst hoher Temperatur erfolgen, da bei steigender Temperatur nicht nur die Geschwindigkeit der Bildung der Mischkristalle zunimmt, sondern auch die Phasenreinheit des erhaltenen Produkts verbessert wird.

Im Gitter der neuen Mischkristalle kann Natrium bis zu 20% unstöchiometrisch auftreten und durch entsprechenden Sauerstoffunterschuß bzw. Überschuß elektrostatisch neutralisiert sein.

Die Elemente M werden bei der Herstellung vorzugsweise in Form ihrer Dioxide, beispielsweise also als $ZrO_2$, eingesetzt. Alternativ können sie auch in Form von metallorganischen Verbindungen verwendet werden, die sich beim Calcinieren zersetzen, wobei angenommen wird, daß sich ein besonders feinteiliges und reaktionsfähiges Dioxid in situ bildet. Beispiele für geeignete metallorganische Verbindungen sind Alkylate, Aralkylate, Acetylacetonate (z. B. $Zr(C_5H_7O_2)_4$) oder andere organische Reste, wie sie auch beispielsweise im Rahmen der Nasicon-Herstellung verwendet werden.

Natrium wird zweckmäßig in Form seines Oxids, Carbonats oder Bicarbonats oder eines Vorläufers, der sich beim Erhitzen in eine dieser Verbindungen umwandelt, eingesetzt. Si wird zweckmäßig in Form des Dioxids verwendet, jedoch kommen auch Silikate in Betracht, welche auch das Element M und Na bereits enthalten können. Das Element der V. Gruppe des Periodischen Systems wird vorzugsweise als Ammoniakat eingesetzt, beispielsweise als $NH_4H_2PO_4$ bzw. entsprechendes Antimonat, Wismutat, Vanadat, Niobat oder Tantalat.

Wie bereits erwähnt, sind die erfindungsgemäßen Mischkristalle ionenleitende Festkörper. Erfindungsgemäß werden sie daher als feste ionenleitende Elektrolyten in einer elektrochemischen Zelle, insbesondere in Hochleistungstemperaturzellen oder Raumtemperaturzellen sowie elektrochromen Anzeigen verwendet. Da sie sich

besonders durch Stabilität gegenüber metallischem Natrium auszeichnen, werden sie vorzugsweise in elektrochemischen Zellen mit einer Anode auf Basis Natrium oder einer Natriumlegierung verwendet.

Unter elektrochemischer Zelle werden hierbei generell neben Batterien auch andere Anordnungen, bei denen die ionenleitenden Eigenschaften eines Elektrolyten technisch ausgenutzt werden, verstanden. Die Anode enthält dabei immer Natrium, muß aber nicht daraus bestehen. Außer Natrium selbst kommen in Betracht Natriumlegierungen oder andere elektronenleitende Substanzen, wie Natrium in einer Graphitmatrix.

Für die Kathode können die gleichen Substanzen verwendet werden, die im Zusammenhang mit elektrochemischen Zellen, welche einen Elektrolyten aus Nasicon oder Na-$\beta$-Alumina enthalten, bekannt sind.

Die folgende Tabelle zeigt die Leitfähigkeiten erfindungsgemäßer Mischkristalle mit M=Zr und Ti und Z=P für verschiedene Werte von x. Die Verbindung x=o dient als Vergleich und zeigt die sprunghafte Änderung beim Übergang von dieser bekannten Verbindung in die erfindungsgemäße Mischkristallreihe hinsichtlich der Leitfähigkeitseigenschaften.

Tabelle

Leitfähigkeitsdaten dieses Mischkristallsystems

| X | Y | 300 K ($\Omega^{-1}$ cm$^{-1}$) | 575 K ($\Omega^{-1}$ cm$^{-1}$) | $E_a$ eV |
|---|---|---|---|---|
| 0 | 0 | $5{,}0 \times 10^{-12}$ | $3{,}0 \times 10^{-6}$ | 0,76 |
| 0,5 | 0,05 | $5{,}4 \times 10^{-8}$ | $5{,}1 \times 10^{-4}$ | 0,53 |
| 1,0 | 0,10 | $5{,}5 \times 10^{-5}$ | $8{,}4 \times 10^{-3}$ | 0,32 |
| 1,2 | 0,12 | $7{,}3 \times 10^{-5}$ | $1{,}4 \times 10^{-2}$ | 0,32 |
| 1,6 | 0 | $4{,}6 \times 10^{-5}$ | $4{,}8 \times 10^{-2}$ | 0,41 |
| 2,0 | 0,2 | $2{,}2 \times 10^{-3}$ | $2{,}4 \times 10^{-1}$ | 0,34 |
| 2,2 | 0,2 | $1{,}0 \times 10^{-3}$ | $1{,}7 \times 10^{-1}$ | 0,31 |
| 2,4 | 0 | $1{,}2 \times 10^{-3}$ | $7{,}6 \times 10^{-2}$ | 0,30 |
| 3,0 | 0 | $1{,}0 \times 10^{-6}$ | $1{,}0 \times 10^{-4}$ | 0,40 |

Die folgenden Beispiele erläutern die Erfindung weiter.

Beispiel 1

Herstellung des erfindungsgemäßen Mischkristalls x=2,2, y=0,183

$Na_{3,2}Zr_{1,45}Si_{2,2}P_{0,8}O_{10,89}$

Einwaage:

1,7 g $Na_2CO_3$
7,07 g $ZrC_{20}H_{28}O_8$ Gesamteinwaage 10,84 g
1,32 g $SiO_2$
0,90 g $NH_4H_2PO_4$

Die 10,84 g werden in einer Mikromühle (Kugel Ø 70 mm) eine Stunde gemischt und gemahlen. Dann wird die Mischung in einer Preßform (2,54 cm Ø) zu einem Preßling verarbeitet und in einem Pt-Tiegel in einen Rohrofen eingebracht. Da die optimalen Sinterbedingungen von der Zusammensetzung des Mischkristalls abhängen, wird der Preßling mit einem für seine Zusammensetzung spezifischen Heizprogramm aufgeheizt. Das im vorliegenden Fall verwendete Heizprogramm basiert auf DTA-Daten, die in Vorversuchen ermittelt wurden, und umfaßt folgende Schritte:

1 h/200°C
2 h/600°C
4 h/1000°C
10 h/1200°C

Das Endprodukt wird 1 Stunde in der Mikromühle (Kugel Ø 70 mm) gemahlen. Die mittlere Korngröße ist kleiner 100 µm. Das Röntgendiagramm zeigt einen hohen Kristallisationsgrad des Syntheseproduktes. Weiter kann man dem Röntgendiagramm entnehmen, daß die Festkörperreaktion während des Kalzinierungsprozesses vollständig abgelaufen ist, weil neben der gewünschten Endverbindung keine weiteren Phasen auftreten. Das pulverförmig vorliegende Produkt kann nun zu scheiben- oder rohrförmigen Keramiken verpreßt werden. Anschließend erfolgt ein Sinterprozeß bei 1240°C für 16 Stunden. Das geformte Endprodukt hat 98% der theoretischen Dichte und wirkt porzellanartig.

Verwendet man anstelle von $ZrC_{20}H_{28}O_8ZrO_2$ als Zirkonspender, ändern sich die einzelnen Heizstufen in Temperatur und Verweildauer. Auch hier lassen sich die optimalen Werte mittels DTA-Voruntersuchungen ermitteln. Gegebenenfalls muß der Kalzinierungsprozeß mehrfach unterbrochen werden, um die Probe in der Mikromühle neu zu vermischen. Der Kalzinierungsprozeß ist dann abgeschlossen, wenn im Röntgendiagramm Phasenreinheit und hoher Kristallisationsgrad gefunden werden.

Beispiel 2

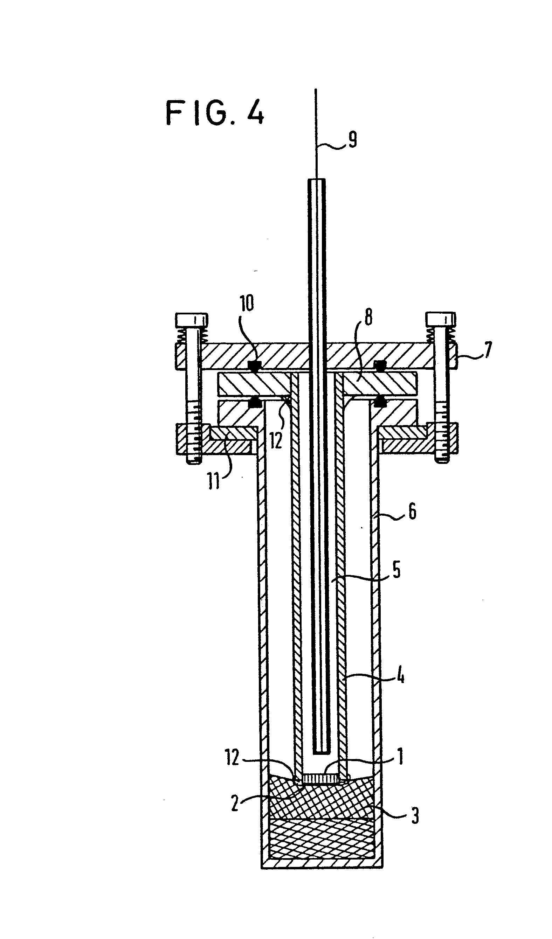

Die Eignung des nach Beispiel 1 erhaltenen tablettenförmigen Mischkristalls als Elektrolyt in einer Natrium-Schwefel-Zelle wurde untersucht. Hierzu wurde die Tablette in die in Fig. 4 der Zeichnung dargestellte Batterie eingesetzt. In dieser stellen dar: 1 die Elektrolyttablette, 2 eine Kohlenstoffschicht, 3 Schwefel in Graphitvlies, 4 ein Korundrohr, das mit Natrium 5 gefüllt ist, 6 ein Rohr aus V4A-Stahl als positiver Ableiter, 7

eine Platte aus V4A-Stahl als negativer Ableiter, 8 eine Korundscheibe als Isolator, 9 einen Temperaturmeßfühler, 10 einen O-Ring aus Aluminium, 11 einen Ring aus Klingerit und 12 Glaslot. Die dargestellte Zelle hat eine Kapazität von 5,77 Ah.

## Patentansprüche

1. Mischkristalle aus dem Vierstoffsystem mit den Endgliedern $Na_2O$, $MO_2$, $Z_2O_5$ und $SiO_2$, wobei M eines der Übergangsmetalle der IV. Gruppe des Periodensystems, Zr, Ti, Hf oder Mischungen davon und Z eines der Elemente der V. Gruppe des Periodensystems, P, Sb, Bi, V, Nb, Ta oder Mischungen davon sind, dadurch gekennzeichnet, daß sie einem Kristallfeld angehören, welches definiert ist durch die quasibinären Schnitte $NaM_2Z_3O_{12}$ ... $Na_4M_{0,5}Si_3O_9$ und $NaM_2Z_3O_{12}$ ... $Na_4M_{1,5}Si_3O_{11}$, ausgenommen die Zusammensetzungen

$NaM_2Z_3O_{12}$ bis $Na_{1,01}M_{1,997}Si_{0,01}Z_{2,99}O_{11,98}$.

2. Mischkristall nach Anspruch 1, dadurch gekennzeichnet, daß M Zr oder ein Gemisch von Zr mit Hf oder Ti ist.

3. Mischkristall nach Anspruch 1 oder 2, dadurch gekennzeichnet, daß Z P ist.

4. Mischkristall nach einem der Ansprüche 1 bis 3, dadurch gekennzeichnet, daß Natrium im Mischkristallgitter bis zu 20% unstöchiometrisch auftritt und durch Sauerstoffunterschuß bzw. Überschuß elektrostatisch neutralisiert vorliegt.

5. Verfahren zur Herstellung eines Mischkristalls nach den Ansprüchen 1 bis 4, dadurch gekennzeichnet, daß die Komponenten des Mischkristalls in den jeweils für eine bestimmte gewünschte Zusammensetzung erforderlichen molaren Anteilen in feinpulveriger Form gemischt und bei einer möglichst hohen Temperatur, jedoch unter Vermeidung des Auftretens einer flüssigen Phase, so lange calciniert werden, bis im Röntgendiagramm kein $MO_2$-Peak mehr erkennbar ist, wobei gegebenenfalls das Calcinieren ein- oder mehrfach unterbrochen wird, um das Material erneut fein zu vermahlen.

6. Verfahren nach Anspruch 5, dadurch gekennzeichnet, daß M in Form von $MO_2$ oder als metallorganische Verbindung eingesetzt wird.

7. Verwendung eines Mischkristalls nach einem der Ansprüche 1 bis 4 als fester ionenleitender Elektrolyt in einer elektrochemischen Zelle.

8. Verwendung eines Mischkristalls nach den Ansprüchen 1 bis 4 als fester Elektrolyt in einer elektrochemischen Zelle gemäß Anspruch 7 mit einer Anode auf Basis Natrium oder einer Natriumlegierung.

## Claims

1. Mixed crystals from the four-component system with the end members $Na_2O$, $MO_2$, $Z_2O_5$ and $SiO_2$, wherein M is a transition metal of Group IV of the Periodic System, Zr, Ti, Hf or mixtures thereof and Z is one of the elements of Group V of the Periodic System, P, Sb, Bi, V, Nb, Ta or mixtures thereof, characterised in that they belong to a crystal field which is defined by the quasi-binary sections $NaM_2Z_3O_{12}$ ... $Na_4M_{0.5}Si_3O_9$ and $NaM_2Z_3O_{12}$ ... $Na_4M_{1.5}Si_3O_{11}$, except the compositions

$NaM_2Z_3O_{12}$ to $Na_{1.01}M_{1.997}Si_{0.01}Z_{2.99}O_{11.98}$.

2. Mixed crystal according to Claim 1, characterised in that M is Zr or a mixture of Zr and Hf or Ti.

3. Mixed crystal according to Claim 1 or 2, characterised in that Z is P.

4. Mixed crystal according to one of Claims 1 to 3, characterised in that sodium occurs non-stiochiometrically in an amount of up to 20% in the mixed crystal lattice and is present electrostatically neutralised by an excess or sub-stoichiometric amount of oxygen.

5. Method for making a mixed crystal according to Claims 1 to 4, characterised in that the components of the mixed crystal are mixed in finely pulverulent form in the molar proportions necessary in each case for a specific desired composition and are calcined at as high a temperature as possible but avoiding the appearance of a liquid phase, until no $MO_2$ peak is detectable any longer in the X-ray diagram, wherein the calcination is if necessary interrupted once or several times in order to regrind the material finely.

6. Method according to Claim 5, characterised in that M is used in the form of $MO_2$ or as an organometallic compound.

7. Use of a mixed crystal according to one of Claims 1 to 4 as a solid ion-conducting electrolyte in an electrochemical cell.

8. Use of a mixed crystal according to Claims 1 to 4 as a solid electrolyte in an electrochemical cell according to Claim 7 with an anode based on sodium or a sodium alloy.

## Revendications

1. Cristaux mixtes à partir du système à quatre composants avec les composants extrêmes $Na_2O$, $MO_2$, $Z_2O_5$ et $SiO_2$, dans lesquels M représente l'un des métaux de transition du groupe IV du système périodique, Zr, Ti, Hf ou des mélanges de ceux-ci et Z représente l'un des éléments du groupe V du système périodique, P, Sb, Bi, V, Nb, Ta ou des mélanges de ceux-ci, caractérisés en ce qu'ils font partie du domaine cristallin qui est défini par les intersections quasibinaires

$NaM_2Z_3O_{12}$ ... $Na_4M_{0,5}Si_3O_9$ et
$NaM_2Z_3O_{12}$ ... $Na_4M_{1,5}Si_2O_{11}$,
à l'exclusion des compositions
$NaM_2Z_3O_{12}$ jusqu'à
$Na_{1,01}M_{1,99}Si_{0,01}Z_{2,99}O_{11,98}$.

2. Cristal mixte selon la revendication 1, caractérisé en ce que M est Zr ou un mélange de Zr avec Hf ou Ti.

3. Cristal mixte selon la revendication 1 ou 2, caractérisé en ce que Z est P.

4. Cristal mixte selon l'une des revendications 1 à 3, caractérisé en ce que le sodium se présente dans le réseau de cristal mixte jusqu'à 20% non stœchiométrique et se trouve neutralisé électrostatiquement par de l'oxygène en quantité insuffisante, respectivement en excès.

5. Procédé de fabrication d'un cristal mixte selon l'une des revendications 1 à 4, caractérisé en ce qu'on calcine les composants du cristal mixte en proportion molaire nécessaire respectivement pour une composition désirée déterminée, mélangés sous forme finement pulvérulente et sous une température la plus élevée possible, cependant en évitant la formation d'une phase liquide, aussi longtemps qu'il est nécessaire pour ne plus reconnaître un pic $MO_2$ dans un diagramme aux rayons X, selon lequel éventuellement on interrompt la calcination une ou plusieurs fois, afin de moudre à nouveau finement le matériau.

6. Procédé selon la revendication 5, caractérisé en ce que M est introduit sous la forme de $MO_2$ ou sous la forme d'un composé organo-métallique.

7. Utilisation d'un cristal mixte selon l'une des revendications 1 à 4, comme électrolyte conducteur ionique solide dans une cellule électrochimique.

8. Utilisation d'un cristal mixte selon l'une des revendications 1 à 4 comme électrolyte solide dans une cellule électrochimique selon la revendication 7 avec une anode à base de sodium ou d'un alliage de sodium.

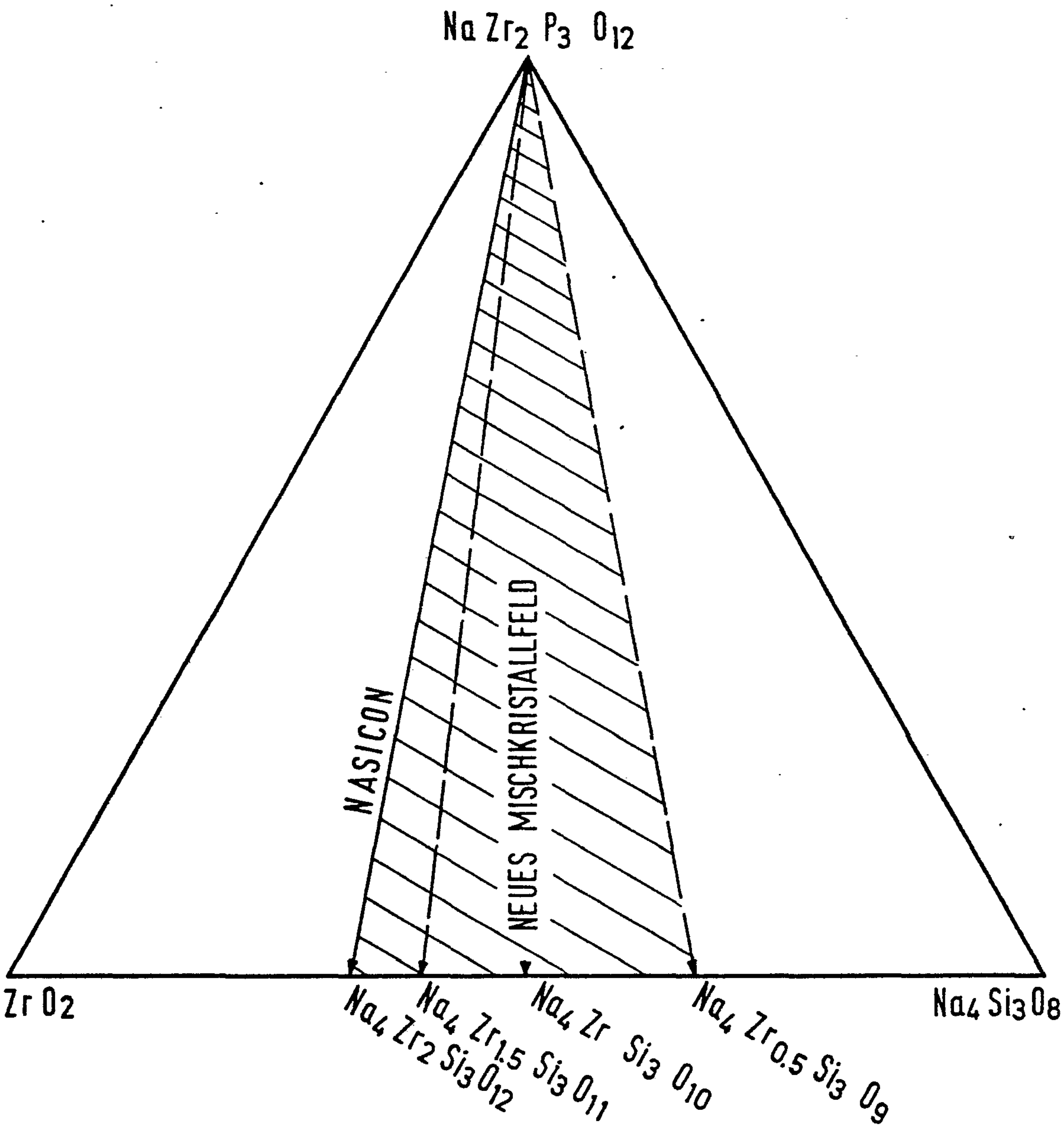


FIG. 1 PHASENBEZIEHUNG FÜR NASICON UND DIE NEUE MISCHPHASE

FIG. 2A

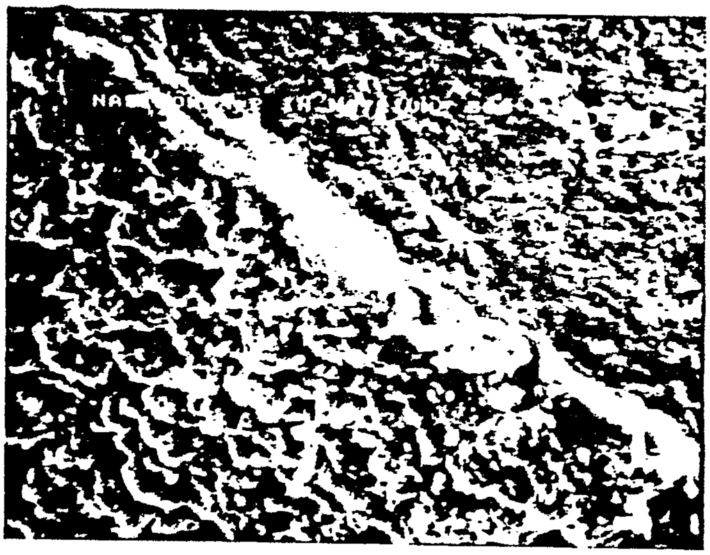

FIG. 2B

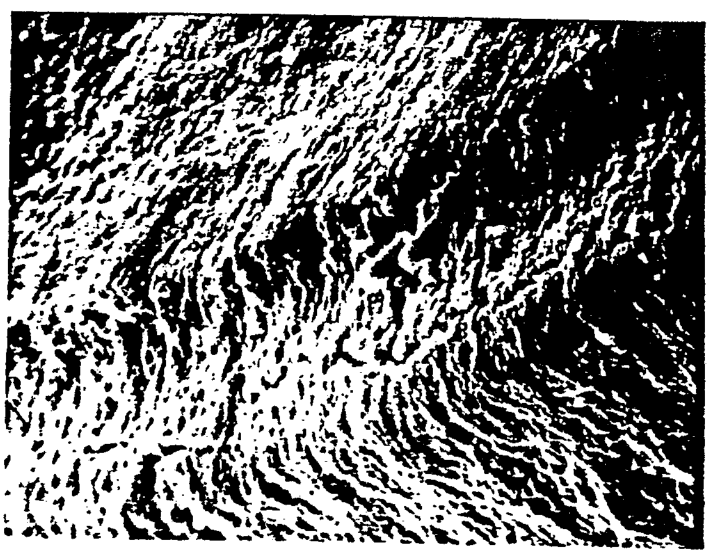

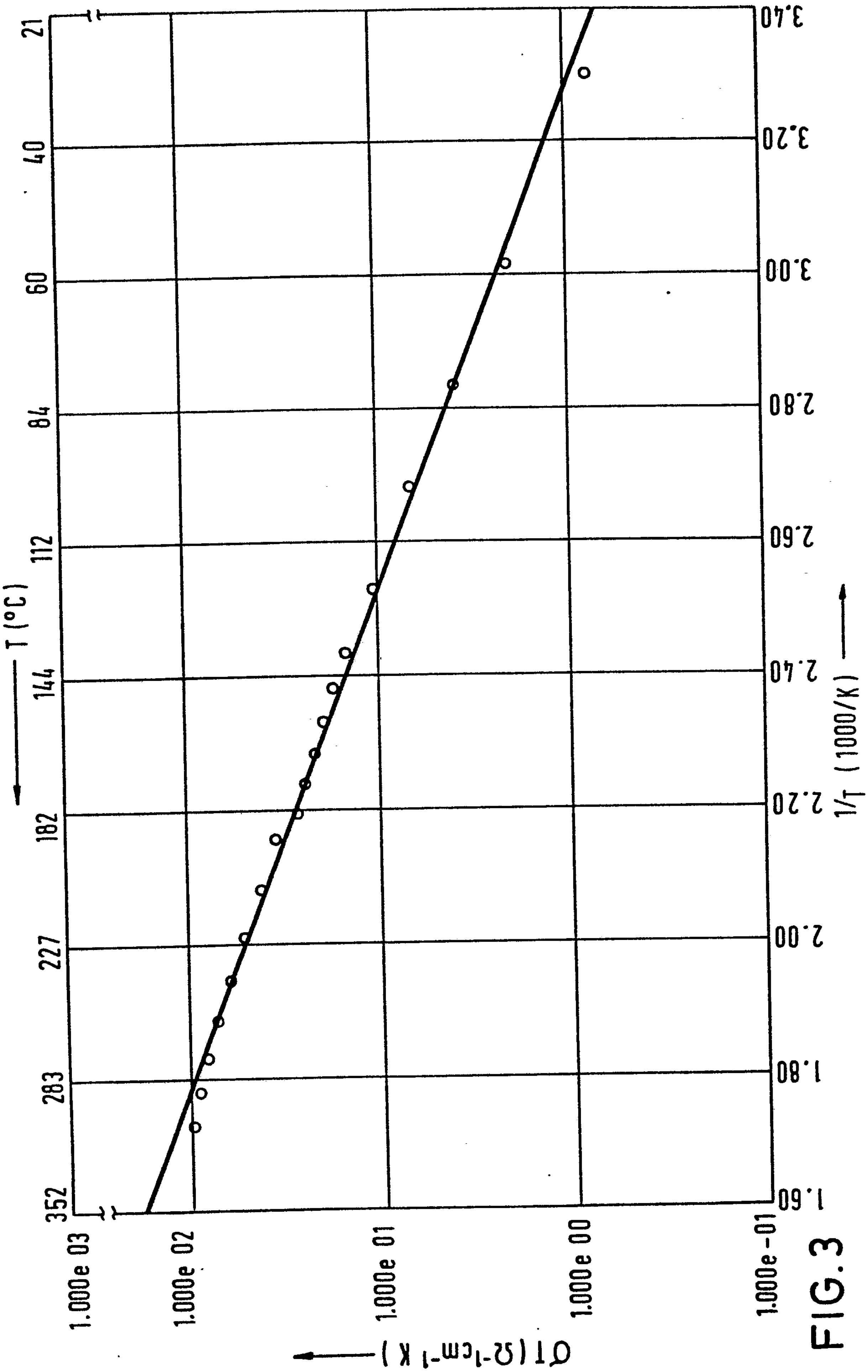
T (°C)
21
40
60
84
112
144
182
227
283
352
3.40
3.20
3.00
2.80
2.60
2.40
2.20
2.00
1.80
1.60
1/T (1000/K)
1.000e 03
1.000e 02
1.000e 01
1.000e 00
1.000e-01
$\sigma T\ (\Omega^{-1}cm^{-1}\ K)$

FIG.3

FIG. 4